# EUROPEAN PATENT SPECIFICATION

(11) **EP 4 418 293 B1**
(45) Date of publication and mention of the grant of the patent: **02.12.2026**
(21) Application number: 24157541.4
(22) Date of filing: 14.02.2024
(51) Int. Cl.: H01H 1/26, H01H 3/42, H01H 19/62, H01H 19/11

(54) **VIBRATION-TOLERANT MULTI-POSITION, MULTI-POLE CONTINUOUS ROTATION STEPPER RELAY**
VIBRATIONSFESTES MULTIPOSITIONIERBARES, MEHRPOLIGES STUFENRELAIS MIT KONTINUIERLICHER DREHUNG
RELAIS PAS-À-PAS À ROTATION CONTINUE MULTIPOLAIRE, À POSITIONS MULTIPLES ET TOLÉRANT AUX VIBRATIONS

(30) Priority: 14.02.2023 US 202318169173
(43) Date of publication of application: 21.08.2024
(73) Proprietor: Hamilton Sundstrand Corporation, Charlotte, NC 28217-4578 (US)
(72) Inventor: WINER, Gordon E., Prescott, AZ (US)
(74) Representative: Dehns

(56) References cited:
- CH-A- 247 549
- US-A1- 2020 395 182
- US-B1- 6 583 371
- US-B2- 7 604 202

## Description

### BACKGROUND

Stepper relays are used to perform various operations for a wide variety of applications. Some stepper relays are used in environments that expose their operation to heavy vibrations. For example, stepper relays have been designed for helicopter rotor-blade de-icing systems. Such rotor-blade deicing systems sequentially activate heating elements at various locations on the rotor blades. Such rotor-blade de-icing systems are exposed to very harsh environmental conditions, requiring wide temperature operation as well as exposure to heavy vibration that results from the operation of the rotor blades. Although operating in a harsh environment, these rotor-blade de-icing systems must be reliable so as to ensure safe operation of the helicopter, especially in icing conditions. CH 247549 A provides a switch contact device with a stepper switch. US 7,604,202 B2 provides an ice management system for tiltrotor aircraft.

### SUMMARY

A method for sequentially opening or closing a plurality of switches of a stepper relay for a rotor-blade de-icing system is provided according to claim 1.

A system for sequentially opening and/or closing a plurality of switches of a stepper relay for a rotor-blade de-icing system is provided according to claim 6.

### BRIEF DESCRIPTION OF THE DRAWINGS

The material described herein is illustrated by way of example and not by way of limitation in the accompanying figures. For simplicity and clarity of illustration, elements illustrated in the figures are not necessarily drawn to scale. For example, the dimensions of some elements may be exaggerated relative to other elements for clarity. Further, where considered appropriate, reference labels have been repeated among the figures to indicate corresponding or analogous elements. In the figures:
FIG. 1 is a perspective view of a helicopter equipped with a deicing system controlled using a multi-pole continuous-rotation stepper relay.
FIG. 2 is a side-elevation view of a multi-pole continuous-rotation stepper relay.
FIG. 3 is a cross-sectional view of a dual multi-pole continuous-rotation stepper relay.
FIG. 4 is a plan view, and side elevation views of switches used in a multi-pole continuous-rotation stepper relay.
FIG. 5 is a side elevation view of a rotation control subsystem for a multi-pole continuous-rotation stepper relay and an axial view of switch controls for the multi-pole continuous-rotation stepper relay.
FIG. 6 shows side-elevation and end-elevation views of the brush assembly depicted in FIG. 5.
FIG. 7 is an end-elevation view of the ratcheting pawl depicted in FIG. 5.
FIG. 8 is an end-elevation view of the rotatable disk depicted in FIG. 5 as it is being rotated in a ratchet fashion by the ratcheting pawl depicted in FIG. 5.
FIGS. 9A and 9B are plan views of the rotational securing assembly depicted in FIG. 5.
FIG. 10 is a graph of control signals that coordinate operation of the rotational securing assembly with the ratcheting assembly.

### DETAILED DESCRIPTION

Apparatus and associated methods relate to sequentially opening and/or closing a plurality of switches. A rotational securing assembly sequentially secures and releases a plurality of indexing members evenly distributed along a circular path centered on an axis of rotation of the rotatable disk, thereby sequentially securing and releasing the rotatable disk to and from a sequence of rotational positions. A ratcheting assembly sequentially engages a plurality of advancing members of the rotatable disk, thereby sequentially rotating the rotatable disk to a next one of the sequence of rotatable positions. A cam coupled to the rotatable disk sequentially either opens or closes a plurality of switches attached to an annular frame and distributed along a second circular path centered on the axis of rotation. Operations of the rotational securing assembly are coordinated with those of the ratcheting assembly so as to advance rotation of the rotatable disk in a stepwise fashion.

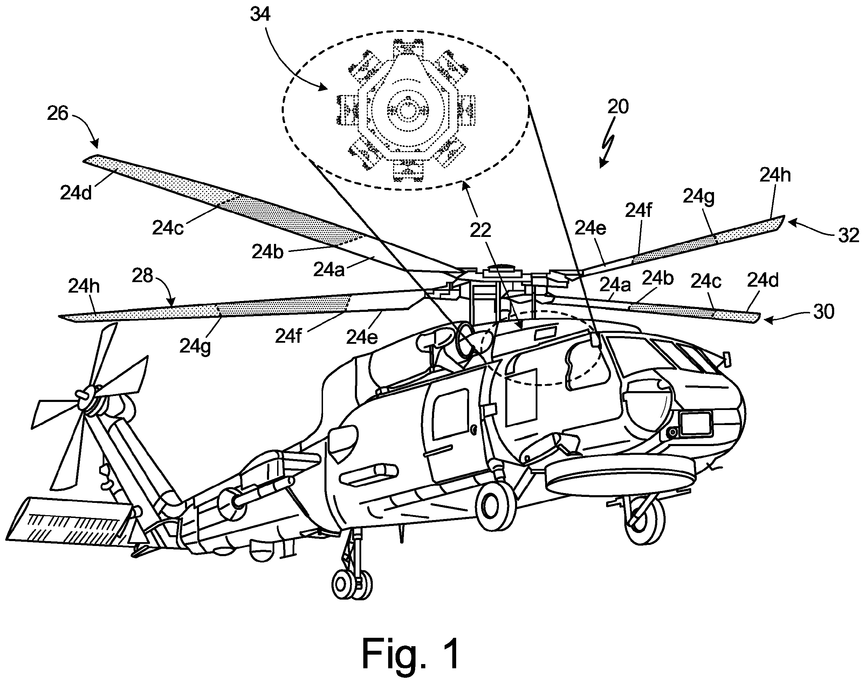

FIG. 1 is a perspective view of a helicopter equipped with a deicing system controlled using a multi-pole continuous-rotation stepper relay. In FIG. 1, helicopter 20 is equipped with deicing system 22. Deicing system 22 includes heating elements 24a-24h, which are located at various spanwise zones of the rotor blades 26, 28, 30 and 32. Heating elements 24a-24h are energized in a sequence. For example, heating elements 24a, which are located at the innermost spanwise zone (i.e., near the rotor hub) of diametrically opposed rotor blades 26 and 30 are energized first. Ice that has accreted upon such locations will be melted and the resulting liquid water will either be shed from the blades or will flow to another spanwise zone. Diametrically opposed pairs of rotor blades are heated at the same time so as to preserve balance, thereby lessening vibration. After the heating elements 24a are deenergized, then heating elements 24b, which are located adjacent to the innermost spanwise zone of rotor blades 26 and 30 are energized. Ice that has accreted upon these zones of blades 26 and 30 will be melted and the resulting liquid water will either be shed from the blades or will flow to another spanwise zone. After the heating elements 24b are deenergized, then heating elements 24c, which are the next zones (proceeding from the hub to the tip) of rotor blades 26 and 30 are energized. Ice that has accreted upon these zones of blades 26 and 30 will be melted and the resulting liquid water will either be shed from the blades or will flow to the outermost spanwise zone (i.e., the zone near the tip of rotor blades 26 and 30). After the heating elements 24c are deenergized, then heating elements 24d, which are the outermost zones (i.e., located at the ends of rotor blades 26 and 30) of rotor blades 26 and 30 are energized. Ice that has accreted upon these zones of blades 26 and 30 will be melted and the resulting liquid water will be shed from rotor blades 26 and 30. Such deicing of oppositely located blades ensures that balance of blades 26 and 30 is maintained throughout the deicing process.

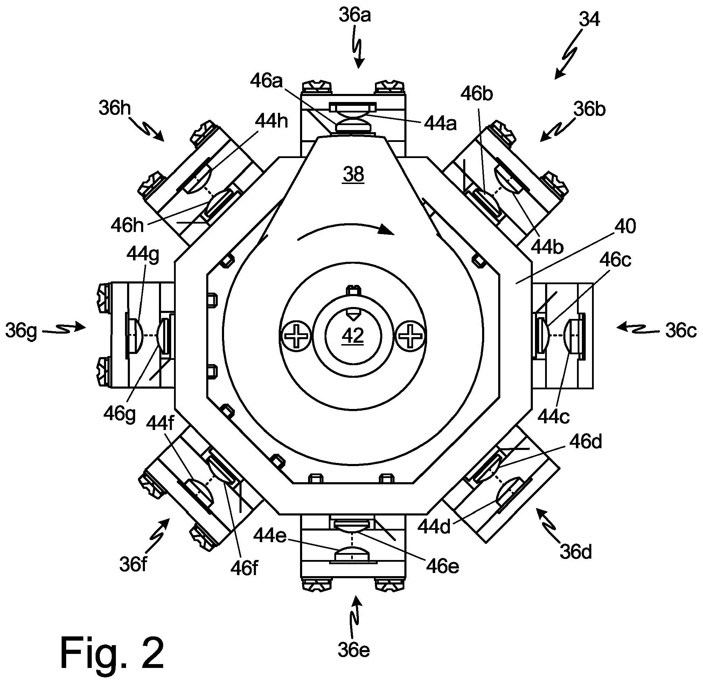

After the above process of deicing blades 26 and 30 has been performed, the process is then performed on blades 28 and 32, beginning with innermost heating elements 24e and ending with outermost heating elements 24h. This sequencing of heating elements 24a-24h has shown to provide good deicing capability while consuming relatively low power. Although the heating elements 24a-24h are depicted as located at various spanwise zones, some embodiments use chordwise zones for deicing rotor blades 26, 28, 30 and 32. In still other embodiments, the zones have both chordwise and spanwise components. Such configurations of zones are designed to best accommodate the flow direction of the liquid water along rotor blades 26, 28, 30 and 32. Such zoned operation of deicing system 22 is performed so that ice that has been liquified in one zone travels to another zone that will then blade-zone which is controlled using continuous-rotation stepper relay 34, which is shown in more detail in FIG. 2.

To actuate heating elements in sequence, deicing system 22 includes continuous-rotation stepper relay 34. Continuous-rotation stepper relay 34 has eight poles 36a-36h or switches that actuate the eight-step sequence described above: i) activating heating element 24a of rotor blades 26 and 30; ii) activating heating element 24b of rotor blades 26 and 30; iii) activating heating element 24c of rotor blades 26 and 30; iv) activating heating element 24d of rotor blades 26 and 30; v) activating heating element 24e of rotor blades 28 and 32; vi) activating heating element 24f of rotor blades 28 and 32; vii) activating heating element 24g of rotor blades 28 and 32; viii) activating heating element 24h of rotor blades 28 and 32. This sequence can then be repeated, for example, continuously, for a period of time, or for a predetermined number of sequences, etc. The eight switches 36a-36h of continuous-rotation stepper relay 34 are evenly distributed along a circular path about rotatable cam 38 that sequentially actuates the eight switches 36a-36h. Rotatable cam 38 is rigidly secured by a rotational securing assembly when actuating one of the eight switches, as will be described below. Such rigid securing of rotatable cam 38 renders operation of switches 36a-38h tolerant of vibration.

Although an eight-step sequence has been described to sequentially activate the eight sets of heating elements 24a-24h, as depicted in FIG. 1, other numbers of heating zones can be utilized using corresponding numbers of heating elements and sequencing steps. Furthermore, although only one switch was described as activating each of heating elements 24a-24h, multiple switches can be activated in each step. For example, to provide three-phase power to each zone, three poles or switches can be activated at each step of the sequence. In another example, each step of the sequence can perform more than one function, and thus use more than one switch or pole.

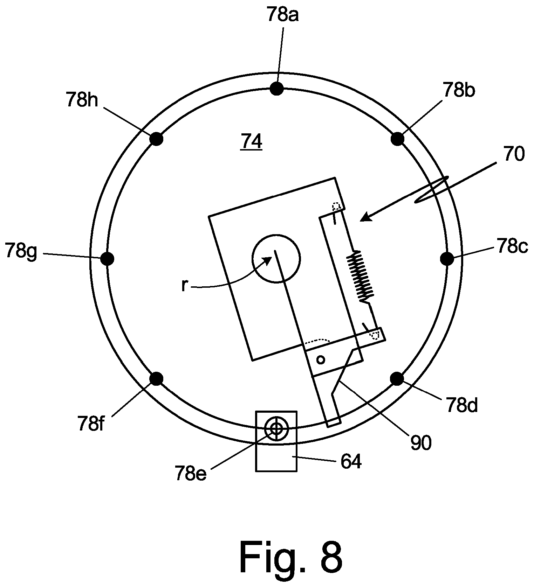

FIG. 2 is a side-elevation view of a multi-pole continuous-rotation stepper relay. In FIG. 2, continuous-rotation stepper relay 34 includes normally-opened switches 36a-36h mounted on annular frame 40 that circumscribes rotatable shaft 42, to which is attached rotatable cam 38. Rotatable shaft 42 rotates, relative to annular frame 40 so as to sequentially align rotatable cam 38 with switches 36a-36h. Instead of rotating at a constant rotational speed, rotatable shaft 42 rotates in a stepwise fashion, advancing rotatable cam 38 quickly when between switches 36a-36h, and then leaving rotatable cam 38 to dwell at each of switches 36a-36h for a predetermined period of time. Such stepwise rotational operation will be described below with respect to FIG. 8. In the FIG. 2 depiction, switches 36a-36h are configured as normally-open. Each of switches 36a-36h has outer contact 44a-44h connected to annular frame 40. Each of switches 36a-36h has a corresponding inner contact 46a-46h that is spring loaded so that when rotatable cam 38 is aligned with inner contact 46a-46h, inner contact 46a-46h moves outwardly so as to conductively engage corresponding outer contact 44a-44h, thereby closing switch 36a-36h.

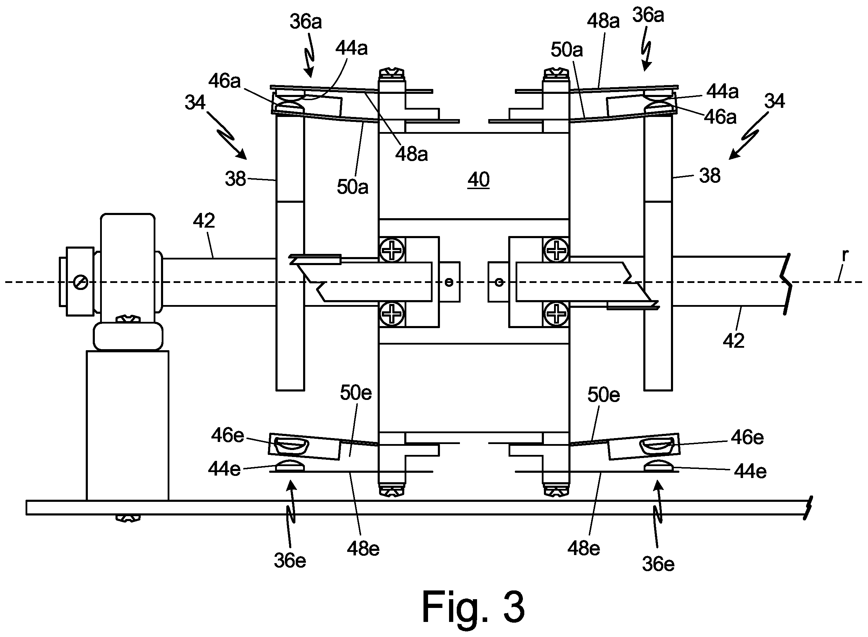

FIG. 3 is a cross-sectional view of a dual multi-pole continuous-rotation stepper relay. FIG. 3 depicts two multi-pole continuous-rotation stepper relays 34 as depicted in FIG. 2 cross-sectioned along rotational axis r and through contacts 44a and 46a of switch 36a, as well as through contacts 44e and 46e of switch 36e. Multi-pole continuous-rotation stepper relays 34 are operated by rotatable cams 38, which in turn are connected to rotatable shafts 42. In the depicted embodiment, rotatable shafts 42 are not connected to one another, thereby facilitating independent operation of each of multi-pole continuous-rotation stepper relays 34. In other embodiments, a single rotatable shaft can be used to rotate both rotatable cams 38, thereby providing coordinated operation of multi-pole continuous-rotation stepper relays 34. In the FIG. 3 embodiment, outer contacts 44a and 44e and inner contacts 46a and 46e are cantilevered from annular frame 40 by cantilevering arms 48a, 48e, and 50a and 50e, respectively. Cantilevering arm 50a of inner contact 46a is deflected upward by rotatable cam 38. Cantilevering arm 48a of upper contact 44a shows only modest upward deflection. A spring constant of lower cantilevering arms 50a-50h can be selected to permit such upward deflection, while being stiff enough so that vibration will not cause lower contacts 46a-46h to make connection with upper contacts 44a-44h when rotatable cam 38 is not aligned thereto. A spring constant of lower cantilevering arms 48a-48h can be selected to be stiff enough so that vibration will not cause upper contacts 44a-44h to lose connection with lower contacts 46a-46h when rotatable cam 38 is aligned thereto. In some embodiments the spring constant of upper cantilevering arms 48a-48h is greater than (e.g., 2 times, 3 times, 5 times, or 10 times greater than) a spring constant of lower cantilevering arms 50a-50h.

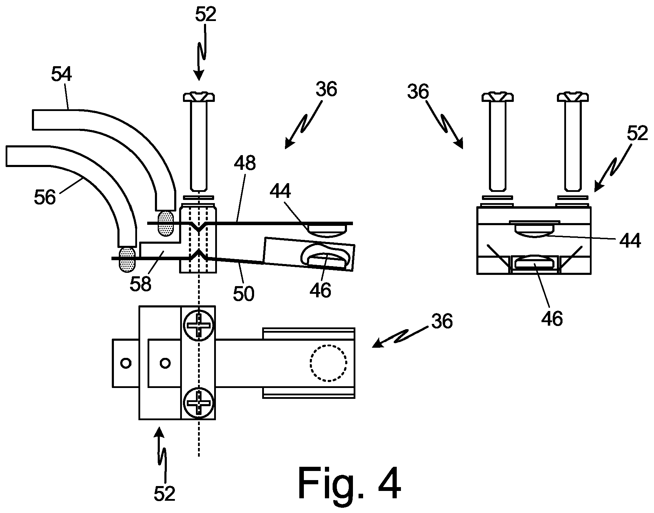

FIG. 4 are plan and side elevation views of a high-current contact switch used in a multi-pole continuous-rotation stepper relay. In FIG. 4, high-current contact switch 36 includes upper contact 44 and lower contact 46. Upper contact 44 is cantilevered from mounting assembly 52 by upper cantilevered arm 48 and lower contact 46 is cantilevered from mounting assembly 52 by lower cantilevered arm 50. Current conductors 54 and 56 are conductively connected to upper 48 and lower 50 cantilevered arms, respectively. Insulative material 58 provides electrical insulation between current conductor 54 and lower cantilevered arm 50. The strength of the spring constant of upper cantilevered arm 48 is sufficient to prevent momentary openings of switch 46 when experiencing maximum expected vibration.

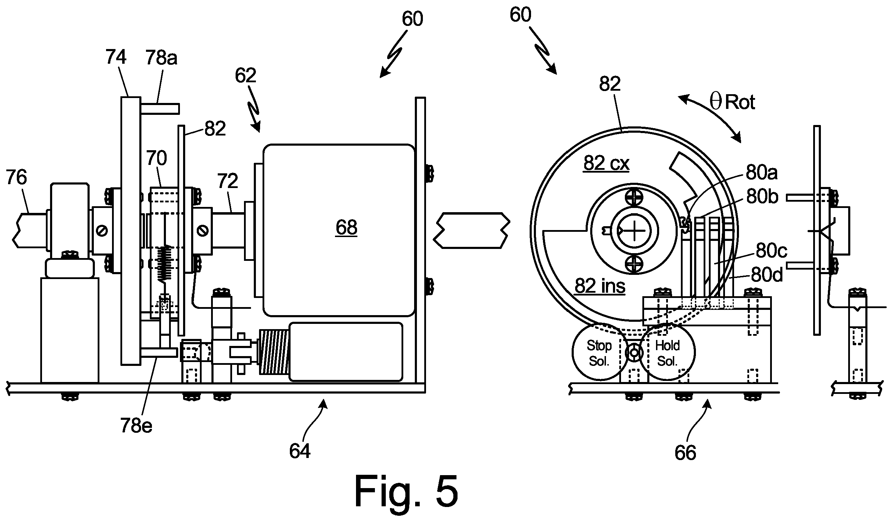

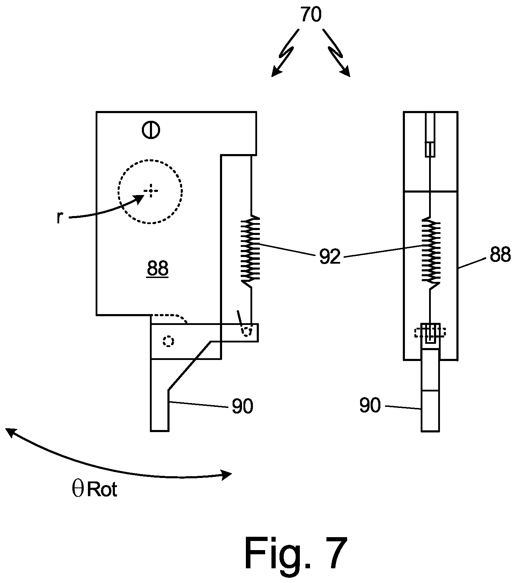

FIG. 5 is a side elevation view of a rotation control subsystem for a multi-pole continuous-rotation stepper relay and an axial view of switch controls for the multi-pole continuous-rotation stepper relay. In FIG. 5, rotation control subsystem 60 includes ratcheting assembly 62, rotational securing assembly 64, and control system 66. Ratcheting assembly 62 includes rotary solenoid 68 coupled to ratcheting pawl 70 via first rotatable shaft 72. Ratcheting assembly 62 is configured to rotate rotatable disk 74, which is connected to rotatable cam 38 (depicted in FIGS. 1-3), via second rotatable shaft 76, which in the depicted embodiment is coaxial with first rotatable shaft 72. Rotary solenoid 68 rotates rotatable disk 74 by alternately rotating ratcheting pawl 70 (which will be shown below in more detail with reference to FIG. 7) back and forth over a predetermined angle of rotation θ_{ROT}. Ratcheting pawl 70 then sequentially engages each of a plurality of indexing members 78a-78h evenly distributed along a circular path centered on an axis of rotation of rotatable disk 74. Only indexing members 78a and 78e, at the 12 o'clock and 6 o' clock positions are depicted in FIG. 5, so that the view of ratcheting pawl 70 is not obscured thereby. In the depicted embodiment, indexing members 78a-78h are cylindrical projections from rotatable disk 74. Various other geometries can be used for the same purpose as that of indexing members 78a-78h.

As ratcheting pawl 70 rotates in a first direction, ratcheting pawl is configured to engage an engagement ready one of indexing members 78a-78h, thereby rotating rotatable disk 74 thereby. As ratcheting pawl 70 rotates in a second direction, opposite the first direction, ratcheting pawl 70 disengages the previously engaged indexing member and bypasses (i.e., without engaging), a next engagement-ready one of indexing members 78a-78h. In this way, ratcheting pawl 70 rotates rotatable disk 74 in a ratcheted fashion, a fraction of a complete rotation at a time (i.e., the fraction equal to 1/n, where n is the number of indexing members 78a-78h). To ensure that the rotatable disk 74 is rotated by the fraction of a complete rotation each engagement, the predetermined angle that rotary solenoid 66 alternately rotates ratcheting pawl 70 is greater than the angular separation between adjacent indexing members (e.g., between 78a and 78b).

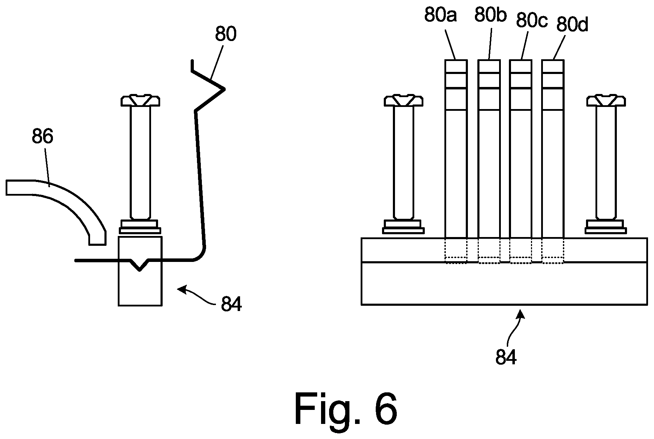

Control system 66 controls coordination of rotational securing assembly 64 with ratcheting assembly 62. Control system 66 includes switches 80a, 80b, and 80c, which control operation of rotational securing assembly 64, which will be described below in more detail below, with reference to FIG. 6. In a nutshell, rotational securing assembly permits free rotation of rotatable disk 74 at specific phases of rotation of ratcheting pawl 70 and secures a position of rotatable disk 74 at other phases of rotation of ratcheting pawl 70. Electrical switches are formed by brushes 80a-80d and Printed Circuit Board (PCB) 82. PCB 82 has exposed copper region 82ex and insulated region 82ins. PCB 82 is coupled to first rotatable shaft 72, thereby alternately rotating, back and forth, over the predetermined angle of rotation θ_{ROT} along with ratcheting pawl 70. As PCB 82 rotates, brushes 80a, 80b, and 80c break or make conductive contact with exposed copper region 82ex. Brush 80d is located at the outer radius of PCB 82 where brush 80d is in conductive contact with exposed copper region 82ex regardless of rotational phase of PCB 82. In the depicted embodiment exposed copper region 82ex circumscribes PCB 82 at the radius that brush 80d is located. In other embodiments, copper is exposed to brush 80d only over the predetermined angle of rotation θ_{ROT} by rotary solenoid 68.

Although the rotation control subsystem described above uses rotary solenoid 68 to alternately rotating ratcheting pawl 70 back and forth over the predetermined angle of rotation θ_{ROT}, other types of reciprocating actuators can be used to perform such a function. For example, a linear solenoid can be configured to alternately move ratcheting pawl 70 back and forth between two predetermined positions, so as to rotate rotatable disk 74 in a ratcheted fashion, a fraction of a complete rotation at a time.

FIG. 6 shows side-elevation and end-elevation views of the brush assembly depicted in FIG. 5. In FIG. 6, brushes 80 (i.e., brushes 80a-80d) are shown from two vantage points. From each vantage point, brushes 80a-80d extend from brush mounting assembly 84. Each of brushes 80 conductively connect to a corresponding electrical wire 86, which carries the electrical signal indicative of the state of brush conduction with exposed copper region 82ex of PCB 82. Brush 80d is in constant conductive contact with exposed copper region 82ex, thereby biasing exposed copper region 82ex. Each of brushes 80a-80c will be biased by exposed copper region 82ex when conductively coupled thereto and will likely be biased by a biasing network otherwise (e.g., a resistive pull-up or pull-down network).

A first switch that formed with brush 80a generates a control signal that is used to cause rotational securing assembly 64 to permit free rotation of rotatable disk 74. A second switch formed with brush 80b generates a control signal that is used to cause rotational securing assembly 64 to block forward rotation of rotatable disk 74. A third switch formed with brush 80c generates a control signal that is used to cause rotational securing assembly 64 to block reverse rotation of rotatable disk 74, thereby securing rotatable disk 74 in a fixed position. If, instead of a rotary solenoid, a linear solenoid is used as the reciprocating actuator, then PCB 82 would have exposed copper region 82ex and insulated copper region 82ins that would have linear geometries rather that semi-circular geometries.

FIG. 7 is an end-elevation view of the ratcheting pawl depicted in FIG. 5. In FIG. 7, ratcheting pawl 70 includes shaft-connecting body 88, pivotable engagement member 90 and return spring 92. Rotary solenoid 68 (depicted in FIG. 5) alternately rotates shaft-connecting body 88 of ratcheting pawl 70 back and forth over a predetermined angle of rotation θ_{ROT} about rotation axis r. Pivotable engagement member 90 is pivotably connected to shaft-connecting body 88. As ratcheting pawl 70 moves in a first direction, pivotable engagement member 90 engages, without pivoting, an engagement-ready one of indexing members 78a-78h (depicted below in FIG. 8), After such engagement, both pivotable engagement member 90 and the engagement-ready one of indexing members 78a-78h move, thereby rotating rotatable disk 74. Rotatable disk 74 rotates until stopped by rotation securing assembly 64. Rotation securing assembly is configured to stop rotation of rotatable disk 74 after being rotated a fraction of a rotation, the fraction defined by an inverse of the number of indexing members 78a-78h. As ratcheting pawl 70 moves in a second direction opposite the first direction, pivotable engagement member 90 disengages the engagement-ready one of indexing members 78a-78h (depicted below in FIG. 8), After such disengagement passes by a next engagement-ready one of indexing members 78a-78h, by pivoting in response to contact with the next engagement-ready one of indexing members 78a-78h. Ratcheting pawl 70 comes to rest in a ready position when rotary solenoid 68 completes its back-and-forth rotation cycle. The rotatable disk rotates one fraction of a rotation in response to each back-and-forth rotation cycle of rotary solenoid 68.

FIG. 8 is an end-elevation view of the rotatable disk depicted in FIG. 5 as it is being rotated in a ratchet fashion by the ratcheting pawl depicted in FIG. 5. In FIG. 5 rotatable disk 74 includes indexing members 78a-78h attached thereto along a circular path centered on an axis of rotation r, In the depicted embodiment such an axis of rotation is shared by both ratcheting pawl 70 and rotatable disk 74. First and second rotatable shafts 72 and 76, to which ratcheting pawl 70 and rotatable disk 74 are connected, respectively, are axially aligned with one another. First rotatable shaft alternately rotates, back and forth, thereby rotating ratcheting pawl 70 in a back-and-forth manner. Each back-and-forth rotation cycle of ratcheting pawl 70 engages and rotates an engagement-ready one of indexing members 78a-78h by a fraction 360°/n of a full rotation, where n is the number of indexing members. In this way, ratcheting pawl 70 sequentially engages each of indexing members 78a-78h so as to rotate rotatable disk 74 in a ratcheted manner. Rotation securing assembly 64 releases a secured one of indexing members 78a-78h immediately before ratcheting pawl 70 engages the engagement ready one of indexing members 78a-78h so that rotatable disk 74 can be rotated upon such engagement. Rotation securing assembly then block forward rotation of one of indexing members 78a-78h so that rotatable disk only rotates the fraction 360°/n of a full rotation each back-and-forth rotation cycle of ratcheting pawl 70. When ratcheting pawl 70 completes such a fraction of rotation, rotation securing assembly 64 blocks reverse rotation of the blocked one of indexing members 78a-78h, thereby securing rotatable disk 74 at the last rotated position. Such securing permits pivotable engagement member 90 to pivot over and past a next engagement-ready one of indexing members 78a-78h when moving in a second direction opposite the first direction.

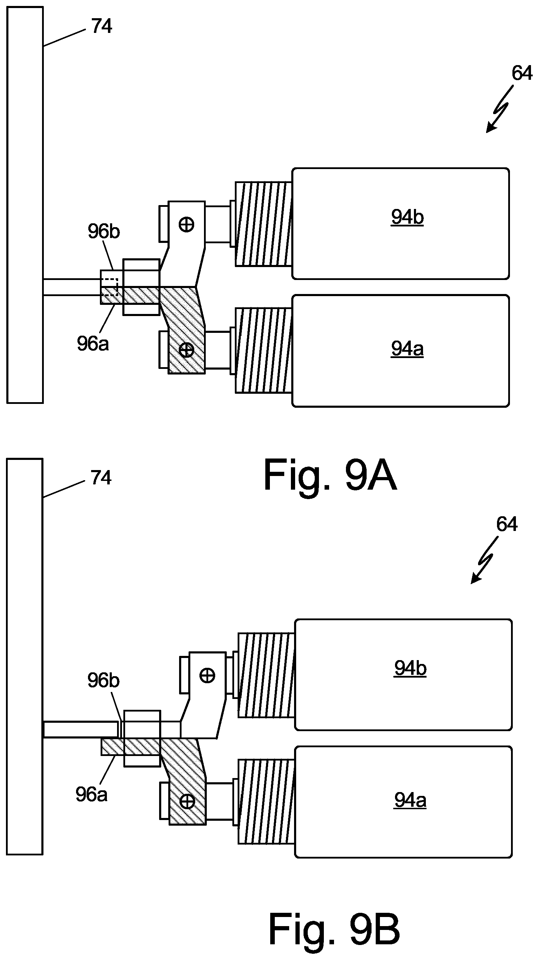

FIGS. 9A and 9B are plan views of the rotational securing assembly depicted in FIG. 5. In FIGS. 9A and 9B, rotation securing assembly 64 includes first solenoid 94a and second solenoid 94b, which linearly project index-stop member 96a and index-hold member 96b toward or away from rotatable disk 74 (depicted in FIG. 8). When projected toward rotatable disk 74, index-stop member 96a blocks forward movement of one of indexing members 78a-78h at a securing location. FIG. 9B depicts such a configuration, with index-stop member 96a projected thereby blocking forward movement of a blocked one of indexing members 78a-78h, which is coupled to rotatable disk 74. After indexing member 78 is blocked by projected index-stop member 96a, then index-hold member 96b will be projected toward rotatable disk 74, thereby blocking reverse movement of the one of indexing members 78a-78h at the securing location (i.e., the one blocked by index-stop member 96a). FIG. 9A depicts such a configuration, with index-stop member 96a and index-hold member projected thereby blocking both forward and reverse movements of a secured one of indexing members 78a-78h, which is coupled to rotatable disk 74. Index-stop member 96a and index-hold member 96b can be cylindrically cupped so as to surround the secured one of indexing members 78a-78h, when both are projected toward rotatable disk 74. Thus, index-stop member 96a and index-hold member 96b cradle the secured one of indexing members 78a-78h.

Although indexing members 78a-78h are used both by the rotational securing assembly 64 (to controllably secure rotatable disk 74) and by ratcheting assembly 62 (to rotate rotatable disk 74), different members can be used for these two different operations. For example, advancing members, different from the indexing members, can be use by ratcheting assembly 62 to rotate rotatable disk 74. Furthermore, the same or different indexing members can be used in each back-and-forth phase of operation, by each of ratcheting assembly 62 and rotational securing assembly 64.

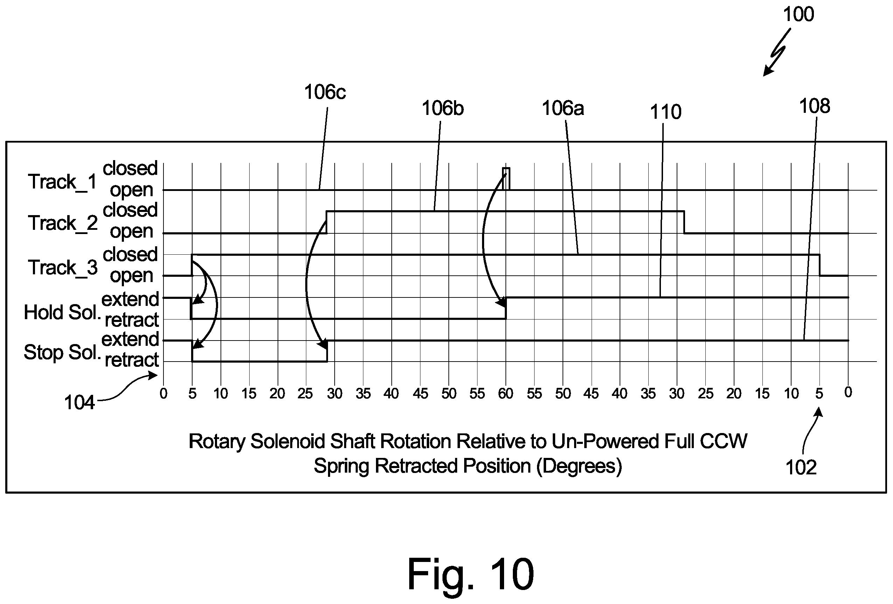

FIG. 10 is a graph of control signals that coordinate operation of the rotational securing assembly with the ratcheting assembly. In FIG. 10, Graph 100 includes horizontal axis 102, vertical axis 104, switch signals 106a-106c and control signals 108 and 110. Horizontal axis 102 is indicative of rotational angle of rotary solenoid 68 as it rotates back and forth over time, and vertical axis 104 is indicative of signal level. Switch signal 106a is generated by brush 80a, which indicates a first rotational angle of ratcheting pawl 70 at which both index-stop member 96a and index-hold member 96b are retracted, thereby permitting free rotation of rotatable disk 74. Switch signal 106b is generated by brush 80b, which indicates a second rotational angle of ratcheting pawl 70 at which index-stop member 96a is projected toward rotatable disk 74, thereby blocking forward movement of one of indexing members 78a-78h. Switch signal 106c is generated by brush 80c, which indicates a third rotational angle of ratcheting pawl 70 at which index-hold member 96b is projected toward rotatable disk 74, thereby blocking reverse movement of the blocked one of indexing members 78a-78h.

Control signals 108 and 110 are generated based on switch signals 106a-106c. Stop control signal 108 controls operation of first solenoid 94a, which projects and retracts index-stop member 96a. Hold control signal 110 controls operation of second solenoid 94b, which projects and retracts index-stop member 96b. In this way, operations of index-stop member 96a and index hold member 96b are coordinated with rotational position of ratcheting pawl 70.

### Discussion of Possible Embodiments

The following are non-exclusive descriptions of possible embodiments of the present invention.

Apparatus and associated methods relate to a for sequentially opening and/or closing a plurality of switches. The system includes a rotatable disk having a plurality of indexing members attached thereto. The plurality of indexing members are evenly distributed along a circular path centered on an axis of rotation of the rotatable disk. The system includes a rotational securing assembly configured to sequentially secure and release the plurality of indexing members attached to a rotatable disk, thereby sequentially securing and releasing the rotatable disk to and from a sequence of rotational positions. The system includes a ratcheting assembly configured to sequentially engage a plurality of advancing members of the rotatable disk, thereby sequentially rotating the rotatable disk to a next one of the sequence of rotatable positions. The system includes a plurality of switches attached to an annular frame and distributed along a second circular path centered on the axis of rotation and axially aligned with a cam coupled to the rotatable disk. Each of the plurality of switches have a spring-loaded contact configured to either open or close the switch in response to a cam being rotatably aligned with the spring-loaded contact. The system includes a control system configured to coordinate operations of the rotational securing assembly with the ratcheting assembly so as to advance rotation of the rotatable disk in a stepwise fashion to a next one in the sequence of rotational positions. The control system causes: i) the rotational securing assembly releases a previously secured one of the plurality of indexing members of the rotatable disk; then ii) the ratcheting assembly engages a next one of the plurality of advancing members of the rotatable disk; then iii) the rotational securing member secures a next secured one of the plurality of indexing members; and iv) the steps i) through iii) are repeated, thereby sequentially opening or closing the plurality of normally-closed and/or normally open switches.

The system of the preceding paragraph can optionally include, additionally and/or alternatively, any one or more of the following features, configurations and/or additional components:
A further embodiment of the foregoing systems, wherein the advancing members and the indexing members can be one and the same.

A further embodiment of any of the foregoing system, wherein the plurality of switches can be distributed at the regular angular intervals along a second circular path centered on the axis of rotation.

A further embodiment of any of the foregoing systems, wherein each of the sequence of rotational positions of the rotatable disk can align the cam with a corresponding one of the plurality of switches.

A further embodiment of any of the foregoing systems, wherein the ratcheting assembly can include: i) a ratcheting pawl configured to engage and rotate an engagement-ready one of the plurality of indexing members when moving in a first direction and to bypass a next engagement-ready one of the plurality of indexing members when moving in a second direction; and/or ii) a reciprocating actuator that alternately moves the ratcheting pawl in the first and second directions, thereby performing cycles of actuation, in each of which the ratcheting pawl engages and rotates the engagement-ready one of the plurality of indexing members thereby rotating the rotatable disk to a next one of the plurality of angular positions.

A further embodiment of any of the foregoing systems, wherein the reciprocating actuator can be a rotary solenoid configured to alternately rotate a ratcheting pawl about the axis of rotation between first and second angular positions having an angular difference therebetween greater than the angular distance equal to regular angular intervals defined by the sequence of rotational positions.

A further embodiment of any of the foregoing systems, wherein the controller can include a plurality of switches configured to generate control signals indicative of rotational angles of the second rotatable shaft corresponding to projecting and retracting of each of the index-stop and the index hold members.

A further embodiment of any of the foregoing systems, wherein the rotational securing assembly can include: i) an index-stop member configured to move between a first position and a second position, the index-stop member configured to permit forward rotation of a last rotation-restricted one of the plurality of indexing members when in the first position and to block forward rotation of a next rotation-restricted one of the plurality of indexing members in the second position; and/or ii) an index-hold member configured to move between a first position and a second position, the index-hold member configured to block reverse rotation of a last rotation-restricted one of the plurality of indexing members in the first position and to permit forward rotation of a next rotation-restricted one of the plurality of indexing members when in the second position.

A further embodiment of any of the foregoing systems, wherein the controller can include: i) a first control switch configured to generate a first signal indicative of a first rotational position of the ratcheting pawl at which the index-stop and index-hold members move from the second positions to the first positions, thereby releasing the secured one of the plurality of indexing members; ii) a second control switch configured to generate a second signal indicative of a second rotational position of the ratcheting pawl at which the index-stop member moves from the first position to the second position, thereby blocking forward rotation of a next secured one of the plurality of indexing members; and/or iii) a third control switch configured to generate a third signal indicative of a third rotational position of the ratcheting pawl at which the index-hold member moves from the first position to the second position, thereby blocking reverse rotation of a next secured one of the plurality of indexing members.

A further embodiment of any of the foregoing systems, wherein the controller can include a Printed Circuit Board (PCB) coupled to the second rotatable shaft, the PCB having exposed radial traces that make electrical contact with a brush assembly, thereby generating the first second and third control signals.

Some embodiments relate to a method for sequentially opening or closing a plurality of switches. The method generally includes the steps of: i) releasing a rotatable disk; ii) rotating the rotatable disk a fraction of a rotation; iii) securing the rotatable disk in the advanced rotation; and then iv) repeating steps i) through iii). These general steps are performed more specifically as follows. A rotation-restricted one of a circular sequence of indexing members attached to a rotatable disk along a circular path centered on an axis of rotation is secured, thereby preventing rotation of the rotatable disk from a secured one of a sequence of rotational positions. A ratcheting pawl is retracted, thereby positioning the ratcheting pawl in a ready-to-advance-rotation position. The rotation-restricted one of the circular sequence of indexing members attached to the rotatable disk is released so that the rotatable disk can be freely rotated. The ratcheting pawl is advanced so as to engage one of a circular sequence of advancing members, thereby rotating the rotatable disk to a next one of the sequence of rotatable positions. An aligned one of a circular sequence of normally-closed and/or normally-open switches is opened or closed, respectively. The circular sequence of normally-closed and/or normally-open switches are attached to an annular frame and distributed along a second circular path centered on the axis of rotation. The above steps are repeated, thereby sequentially opening and/or closing the circular sequence of normally-closed and/or normally open switches.

The method of the preceding paragraph can optionally include, additionally and/or alternatively, any one or more of the following features, configurations and/or additional components:
A further embodiment of the foregoing method, wherein securing the rotation-restricted one of the circular sequence of indexing members attached to the rotatable disk can include: i) blocking, via an index-stop member, a forward path of the rotation-restricted one of the circular sequence of indexing members, thereby causing the rotational disk to stop rotating when the rotation-restricted one of the circular sequence of indexing members engages the index-stop member; and/or ii) blocking, via the index-hold member, a reverse path of the rotation-restricted one of the circular sequence of indexing members, thereby restricting reverse rotation of the rotational disk.

A further embodiment of any of the foregoing methods, wherein releasing the rotation-restricted one of the circular sequence of indexing members attached to the rotatable disk can include disengaging an index-stop member and an index hold member from the rotation-restricted one of a circular sequence of indexing members coupled to the rotatable disk, thereby permitting free rotation of the rotatable disk.

A further embodiment of any of the foregoing methods, wherein advancing the ratcheting pawl so as to engage one of a circular sequence of advancing members can include alternately moving, via a reciprocating actuator, the ratcheting pawl in the first and second directions, thereby performing cycles of actuation, in each of which the ratcheting pawl engages and rotates an engagement-ready one of the circular sequence of indexing members thereby rotating the rotatable disk to a next one of the plurality of angular positions.

A further embodiment of any of the foregoing methods, wherein the reciprocating actuator is a rotating solenoid, and wherein advancing a ratcheting pawl in a first direction can include rotating from a first angular position through a predetermined angle to a second angular position in a forward angular direction a rotatable shaft to which the ratcheting pawl is connected, wherein rotating the rotatable shaft is in response to forward operation of a rotary solenoid.

A further embodiment of any of the foregoing methods, can further include: synchronizing the index-stop member with the angular position of the ratcheting pawl; and/or ii) synchronizing the index-hold member with the angular position of the ratcheting pawl.

A further embodiment of any of the foregoing methods, wherein synchronizing the index-stop and index-hold members can include actuating a plurality of switches in response to rotational position of the ratcheting pawl.

A further embodiment of any of the foregoing methods, wherein disengaging an index-stop member and an index hold member from a last rotation-restricted one of a plurality of indexing members can be controlled by a first electrical switch activating in response to the rotational position of the ratcheting pawl being greater than a first predetermined rotational angle.

A further embodiment of any of the foregoing methods, wherein blocking, via the index-stop member, the forward path of the next rotation-restricted one of the plurality of indexing members can be controlled by a second electrical switch activating in response to the rotational position of the ratcheting pawl being greater than a second predetermined rotational angle.

A further embodiment of any of the foregoing methods, wherein blocking, via the index-hold member, the reverse path of the next rotation-restricted one of the plurality of indexing members can be controlled by a third electrical switch activating in response to the rotational position of the ratcheting pawl being greater than a third predetermined rotational angle.

The scope of the invention should be determined with reference to the appended claims.

## Claims

1. A method for sequentially opening and/or closing a sequence of switches of a stepper relay for a rotor-blade de-icing system, the method comprising the steps of:
securing a rotation-restricted one of a circular sequence of indexing members (78ah) attached to a rotatable disk (74) along a circular path centered on an axis of rotation, wherein the securing is controlled by a control system configured to coordinate operations of the rotational securing assembly and the ratcheting assembly, thereby preventing rotation of the rotatable disk (74) from a secured one of a sequence of rotational positions;
retracting a ratcheting pawl (70), thereby positioning the ratcheting pawl (70) in a ready-to-advance-rotation position;
releasing the rotation-restricted one of the circular sequence of indexing members (78a-h) attached to the rotatable disk (74) so that the rotatable disk (74) can be freely rotated;
advancing the ratcheting pawl (70) so as to engage one of a circular sequence of advancing members, thereby rotating the rotatable disk (74) to a next one of the sequence of rotatable positions;
opening or closing, via a cam coupled to the rotatable disk (74), an aligned one of a circular sequence of normally-closed and/or normally-open switches, respectively, which are attached to an annular frame and distributed along a second circular path centered on the axis of rotation; and
repeating the above steps, thereby sequentially opening and/or closing the circular sequence of normally-closed and/or normally open switches.

2. The method of claim 1, wherein securing the rotation-restricted one of the circular sequence of indexing members (78a-h) attached to the rotatable disk (74) comprises:
blocking, via an index-stop member, a forward path of the rotation-restricted one of the circular sequence of indexing members (78a-h), thereby causing the rotational disk to stop rotating when the rotation-restricted one of the circular sequence of indexing members (78a-h) engages the index-stop member; and
blocking, via the index-hold member, a reverse path of the rotation-restricted one of the circular sequence of indexing members (78a-h), thereby restricting reverse rotation of the rotational disk, and
wherein releasing the rotation-restricted one of the circular sequence of indexing members (78a-h) attached to the rotatable disk (74) comprises:
disengaging an index-stop member and an index hold member from the rotation-restricted one of a circular sequence of indexing members (78a-h) coupled to the rotatable disk (74), thereby permitting free rotation of the rotatable disk (74), and
wherein advancing the ratcheting pawl (70) so as to engage one of a circular sequence of advancing members comprises:
alternately moving, via a reciprocating actuator, the ratcheting pawl (70) in the first and second directions, thereby performing cycles of actuation, in each of which the ratcheting pawl (70) engages and rotates an engagement-ready one of the circular sequence of indexing members (78a-h) thereby rotating the rotatable disk (74) to a next one of the plurality of angular positions.

3. The method of any preceding claim, wherein the reciprocating actuator is a rotating solenoid, and wherein advancing a ratcheting pawl (70) in a first direction comprises:
rotating from a first angular position through a predetermined angle to a second angular position in a forward angular direction a rotatable shaft to which the ratcheting pawl (70) is connected, wherein rotating the rotatable shaft is in response to forward operation of a rotary solenoid, and
further comprising:
synchronizing the index-stop member with the angular position of the ratcheting pawl (70); and
synchronizing the index-hold member with the angular position of the ratcheting pawl (70).

4. The method of any preceding claim, wherein synchronizing the index-stop and index-hold members comprises:
actuating a plurality of switches in response to rotational position of the ratcheting pawl (70), and wherein disengaging an index-stop member and an index hold member from a last rotation-restricted one of a plurality of indexing members (78a-h) is controlled by a first electrical switch activating in response to the rotational position of the ratcheting pawl (70) being greater than a first predetermined rotational angle.

5. The method of any preceding claim , wherein blocking, via the index-stop member, the forward path of the next rotation-restricted one of the plurality of indexing members (78a-h) is controlled by a second electrical switch activating in response to the rotational position of the ratcheting pawl (70) being greater than a second predetermined rotational angle, and wherein blocking, via the index-hold member, the reverse path of the next rotation-restricted one of the plurality of indexing members (78a-h) is controlled by a third electrical switch activating in response to the rotational position of the ratcheting pawl (70) being greater than a third predetermined rotational angle.

6. A system for sequentially opening and/or closing a plurality of switches of a stepper relay for a rotor-blade de-icing system, the system comprising:
a rotatable disk (74) having a plurality of indexing members (78a-h) attached thereto, the plurality of indexing members (78a-h) evenly distributed along a circular path centered on an axis of rotation of the rotatable disk (74);
a ratcheting assembly configured to sequentially engage a plurality of advancing members of the rotatable disk (74), thereby sequentially rotating the rotatable disk (74) to a next one of the sequence of rotatable positions;
a plurality of switches attached to an annular frame and distributed along a second circular path centered on the axis of rotation and axially aligned with a cam coupled to the rotatable disk (74), each of the plurality of switches having a spring-loaded contact configured to either open or close the switch in response to a cam being rotatably aligned with the spring-loaded contact; and **characterized by**,
a rotational securing assembly configured to sequentially secure and release the plurality of indexing members (78a-h) attached to a rotatable disk (74), thereby sequentially securing and releasing the rotatable disk (74) to and from a sequence of rotational positions; and
a control system configured to coordinate operations of the rotational securing assembly with the ratcheting assembly so as to advance rotation of the rotatable disk (74) in a stepwise fashion to a next one in the sequence of rotational positions, such that: i) the rotational securing assembly releases a previously secured one of the plurality of indexing members (78a-h) of the rotatable disk (74); then ii) the ratcheting assembly engages a next one of the plurality of advancing members of the rotatable disk (74); then iii) the rotational securing member secures a next secured one of the plurality of indexing members (78a-h); and iv) the steps i) through iii) are repeated, thereby sequentially opening or closing the plurality of normally-closed and/or normally open switches.

7. The system of claim 6, wherein the advancing members and the indexing members (78ah) are one and the same.

8. The system of claim 6 or 7, wherein the plurality of switches are distributed at the regular angular intervals along a second circular path centered on the axis of rotation.

9. The system of any of claims 6 to 8, wherein each of the sequence of rotational positions of the rotatable disk (74) aligns the cam with a corresponding one of the plurality of switches.

10. The system of any of claims 6 to 9, wherein the ratcheting assembly comprises:
a ratcheting pawl (70) configured to engage and rotate an engagement-ready one of the plurality of indexing members (78a-h) when moving in a first direction and to bypass a next engagement-ready one of the plurality of indexing members (78a-h) when moving in a second direction; and
a reciprocating actuator that alternately moves the ratcheting pawl (70) in the first and second directions, thereby performing cycles of actuation, in each of which the ratcheting pawl (70) engages and rotates the engagement-ready one of the plurality of indexing members (78a-h) thereby rotating the rotatable disk (74) to a next one of the plurality of angular positions.

11. The system of 10, wherein the reciprocating actuator comprises a rotary solenoid configured to alternately rotate a ratcheting pawl (70) about the axis of rotation between first and second angular positions having an angular difference therebetween greater than the angular distance equal to regular angular intervals defined by the sequence of rotational positions.

12. The system of any of claims 6 to 11, wherein the controller comprises:
a plurality of switches configured to generate control signals indicative of rotational angles of the second rotatable shaft corresponding to projecting and retracting of each of the index-stop and the index hold members.

13. The system of any of claims 6 to 12, wherein the rotational securing assembly comprises:
an index-stop member configured to move between a first position and a second position, the index-stop member configured to permit forward rotation of a last rotation-restricted one of the plurality of indexing members (78a-h) when in the first position and to block forward rotation of a next rotation-restricted one of the plurality of indexing members (78a-h) in the second position; and
an index-hold member configured to move between a first position and a second position, the index-hold member configured to block reverse rotation of a last rotation-restricted one of the plurality of indexing members (78a-h) in the first position and to permit forward rotation of a next rotation-restricted one of the plurality of indexing members (78a-h) when in the second position.

14. The system of any of claims 6 to 13, wherein the controller comprises:
a first control switch configured to generate a first signal indicative of a first rotational position of the ratcheting pawl (70) at which the index-stop and index-hold members move from the second positions to the first positions, thereby releasing the secured one of the plurality of indexing members (78ah);
a second control switch configured to generate a second signal indicative of a second rotational position of the ratcheting pawl (70) at which the index-stop member moves from the first position to the second position, thereby blocking forward rotation of a next secured one of the plurality of indexing members (78a-h); and
a third control switch configured to generate a third signal indicative of a third rotational position of the ratcheting pawl (70) at which the index-hold member moves from the first position to the second position, thereby blocking reverse rotation of a next secured one of the plurality of indexing members (78a-h).

15. The system of any of claims 6 to 14, wherein the controller comprises:
a Printed Circuit Board "PCB" coupled to the second rotatable shaft, the PCB having exposed radial traces that make electrical contact with a brush assembly, thereby generating the first second and third control signals.

## Patentansprüche

1. Verfahren zum sequenziellen Öffnen und/oder Schließen einer Abfolge von Schaltern eines Schrittrelais für ein Rotorblatt-Enteisungssystem, wobei das Verfahren die folgenden Schritte umfasst:
Sichern eines rotationsbegrenzten Elements einer kreisförmigen Abfolge von Indexierelementen (78a-h), die an einer drehbaren Scheibe (74) entlang eines kreisförmigen, auf eine Drehachse zentrierten Pfades angebracht sind, wobei das Sichern durch ein Steuersystem gesteuert wird, das zur Koordinierung der Vorgänge der Rotationssicherungsanordnung und der Schaltklinkenanordnung konfiguriert ist,
wodurch eine Drehung der drehbaren Scheibe (74) aus einer gesicherten Rotationsposition einer Abfolge von Rotationspositionen verhindert wird;
Zurückziehen einer Schaltklinke (70), wodurch die Schaltklinke (70) in eine bereit-zum-Vorrücken-der-Drehung-Position gebracht wird;
Freigeben des rotationsbegrenzten Elements der kreisförmigen Abfolge von Indexierelementen (78a-h), die an der drehbaren Scheibe (74) angebracht sind, sodass die drehbare Scheibe (74) frei gedreht werden kann;
Vorrücken der Schaltklinke (70), um in ein Element einer kreisförmigen Abfolge von Vorrückelementen einzugreifen, wodurch die drehbare Scheibe (74) zu einer nächsten Rotationsposition der Abfolge von Rotationspositionen gedreht wird;
Öffnen oder Schließen, über einen mit der drehbaren Scheibe (74) gekoppelten Nocken, eines ausgerichteten Elements einer kreisförmigen Abfolge von normalerweise geschlossenen und/oder normalerweise offenen Schaltern, die an einem Ringrahmen angebracht und entlang eines zweiten, auf die Drehachse zentrierten kreisförmigen Pfades verteilt sind; und
Wiederholen der obigen Schritte, wodurch die kreisförmige Abfolge von normalerweise geschlossenen und/oder normalerweise offenen Schaltern sequenziell geöffnet und/oder geschlossen wird.

2. Verfahren nach Anspruch 1, wobei das Sichern des rotationsbegrenzten Elements der kreisförmigen Abfolge von Indexierelementen (78a-h), die an der drehbaren Scheibe (74) angebracht sind, Folgendes umfasst:
Blockieren, über ein Indexanschlagelement, eines Vorwärtspfades des rotationsbegrenzten Elements der kreisförmigen Abfolge von Indexierelementen (78a-h), wodurch die drehbare Scheibe veranlasst wird, sich nicht mehr zu drehen, wenn das rotationsbegrenzte Element der kreisförmigen Abfolge von Indexierelementen (78a-h) mit dem Indexanschlagelement in Eingriff tritt; und
Blockieren, über das Index-Halteelement, eines Rückwärtspfades des rotationsbegrenzten Elements der kreisförmigen Abfolge von Indexierelementen (78a-h), wodurch eine Rückwärtsdrehung der drehbaren Scheibe eingeschränkt wird, und
wobei das Freigeben des rotationsbegrenzten Elements der kreisförmigen Abfolge von Indexierelementen (78a-h), die an der drehbaren Scheibe (74) angebracht sind, Folgendes umfasst:
Außereingriffbringen eines Indexanschlagelements und eines Index-Halteelements von dem rotationsbegrenzten Element einer kreisförmigen Abfolge von Indexierelementen (78a-h), die mit der drehbaren Scheibe (74) gekoppelt sind, wodurch eine freie Drehung der drehbaren Scheibe (74) ermöglicht wird, und
wobei das Vorrücken der Schaltklinke (70), um in ein Element einer kreisförmigen Abfolge von Vorrückelementen einzugreifen, Folgendes umfasst:
abwechselndes Bewegen, über einen hin- und herbewegenden Aktuator, der Schaltklinke (70) in die erste und zweite Richtung, wodurch Betätigungszyklen durchgeführt werden, in denen jeweils die Schaltklinke (70) in ein eingriffbereites Element der kreisförmigen Abfolge von Indexierelementen (78a-h) eingreift und dieses dreht, wodurch die drehbare Scheibe (74) zu einer nächsten Winkelposition der Mehrzahl von Winkelpositionen gedreht wird.

3. Verfahren nach einem der vorhergehenden Ansprüche, wobei der hin- und herbewegende Aktuator ein Drehmagnet ist, und wobei das Vorrücken einer Schaltklinke (70) in einer ersten Richtung Folgendes umfasst:
Drehen, von einer ersten Winkelposition durch einen vorbestimmten Winkel zu einer zweiten Winkelposition in einer vorwärtsgerichteten Winkelrichtung, einer drehbaren Welle, mit der die Schaltklinke (70) verbunden ist, wobei das Drehen der drehbaren Welle als Reaktion auf einen Vorwärtsbetrieb eines Drehmagneten erfolgt, und
ferner umfassend:
Synchronisieren des Indexanschlagelements mit der Winkelposition der Schaltklinke (70); und
Synchronisieren des Index-Halteelements mit der Winkelposition der Schaltklinke (70).

4. Verfahren nach einem der vorhergehenden Ansprüche, wobei das Synchronisieren des Indexanschlag- und Index-Halteelements Folgendes umfasst:
Betätigen einer Mehrzahl von Schaltern als Reaktion auf die Rotationsposition der Schaltklinke (70), und wobei das Außereingriffbringen eines Indexanschlagelements und eines Index-Halteelements von einem letzten rotationsbegrenzten Element einer Mehrzahl von Indexierelementen (78a-h) durch einen ersten elektrischen Schalter gesteuert wird, der sich als Reaktion darauf aktiviert, dass die Rotationsposition der Schaltklinke (70) größer als ein erster vorbestimmter Rotationswinkel ist.

5. Verfahren nach einem der vorhergehenden Ansprüche, wobei das Blockieren, über das Indexanschlagelement, des Vorwärtspfades des nächsten rotationsbegrenzten Elements der Mehrzahl von Indexierelementen (78a-h) durch einen zweiten elektrischen Schalter gesteuert wird, der sich als Reaktion darauf aktiviert, dass die Rotationsposition der Schaltklinke (70) größer als ein zweiter vorbestimmter Rotationswinkel ist, und wobei das Blockieren, über das Index-Halteelement, des Rückwärtspfades des nächsten rotationsbegrenzten Elements der Mehrzahl von Indexierelementen (78a-h) durch einen dritten elektrischen Schalter gesteuert wird, der sich als Reaktion darauf aktiviert, dass die Rotationsposition der Schaltklinke (70) größer als ein dritter vorbestimmter Rotationswinkel ist.

6. System zum sequenziellen Öffnen und/oder Schließen einer Mehrzahl von Schaltern eines Schrittrelais für ein Rotorblatt-Enteisungssystem, wobei das System Folgendes umfasst:
eine drehbare Scheibe (74) mit einer Mehrzahl von daran angebrachten Indexierelementen (78a-h), wobei die Mehrzahl von Indexierelementen (78a-h) gleichmäßig entlang eines kreisförmigen, auf eine Drehachse der drehbaren Scheibe (74) zentrierten Pfades verteilt ist;
eine Schaltklinkenanordnung, die konfiguriert ist, sequenziell in eine Mehrzahl von Vorrückelementen der drehbaren Scheibe (74) einzugreifen, wodurch die drehbare Scheibe (74) sequenziell zu einer nächsten Rotationsposition der Abfolge von Rotationspositionen gedreht wird;
eine Mehrzahl von Schaltern, die an einem Ringrahmen angebracht und entlang eines zweiten, auf die Drehachse zentrierten kreisförmigen Pfades verteilt und axial mit einem mit der drehbaren Scheibe (74) gekoppelten Nocken ausgerichtet sind, wobei jeder der Mehrzahl von Schaltern einen federbelasteten Kontakt aufweist, der konfiguriert ist, den Schalter als Reaktion darauf, dass ein Nocken drehbar mit dem federbelasteten Kontakt ausgerichtet ist, entweder zu öffnen oder zu schließen; und
**dadurch gekennzeichnet, dass**
eine Rotationssicherungsanordnung, die konfiguriert ist, die Mehrzahl von Indexierelementen (78a-h), die an einer drehbaren Scheibe (74) angebracht sind, sequenziell zu sichern und freizugeben, wodurch die drehbare Scheibe (74) sequenziell zu und von einer Abfolge von Rotationspositionen gesichert und freigegeben wird; und
ein Steuersystem, das konfiguriert ist, die Vorgänge der Rotationssicherungsanordnung mit der Schaltklinkenanordnung zu koordinieren, um die Drehung der drehbaren Scheibe (74) schrittweise zu einer nächsten Rotationsposition der Abfolge von Rotationspositionen vorzurücken, derart, dass: i) die Rotationssicherungsanordnung ein zuvor gesichertes Element der Mehrzahl von Indexierelementen (78a-h) der drehbaren Scheibe (74) freigibt; dann ii) die Schaltklinkenanordnung in ein nächstes Element der Mehrzahl von Vorrückelementen der drehbaren Scheibe (74) eingreift; dann iii) das Rotationssicherungselement ein nächstes gesichertes Element der Mehrzahl von Indexierelementen (78a-h) sichert; und iv) die Schritte i) bis iii) wiederholt werden, wodurch die Mehrzahl von normalerweise geschlossenen und/oder normalerweise offenen Schaltern sequenziell geöffnet oder geschlossen wird.

7. System nach Anspruch 6, wobei die Vorrückelemente und die Indexierelemente (78a-h) ein und dasselbe sind.

8. System nach Anspruch 6 oder 7, wobei die Mehrzahl von Schaltern in regelmäßigen Winkelabständen entlang eines zweiten, auf die Drehachse zentrierten kreisförmigen Pfades verteilt ist.

9. System nach einem der Ansprüche 6 bis 8, wobei jede der Abfolge von Rotationspositionen der drehbaren Scheibe (74) den Nocken mit einem entsprechenden Schalter der Mehrzahl von Schaltern ausrichtet.

10. System nach einem der Ansprüche 6 bis 9, wobei die Schaltklinkenanordnung Folgendes umfasst:
eine Schaltklinke (70), die konfiguriert ist, in ein eingriffbereites Element der Mehrzahl von Indexierelementen (78a-h) einzugreifen und dieses zu drehen, wenn sie sich in eine erste Richtung bewegt, und ein nächstes eingriffbereites Element der Mehrzahl von Indexierelementen (78a-h) zu umgehen, wenn sie sich in eine zweite Richtung bewegt; und
einen hin- und herbewegenden Aktuator, der die Schaltklinke (70) abwechselnd in die erste und zweite Richtung bewegt, wodurch Betätigungszyklen durchgeführt werden, in denen jeweils die Schaltklinke (70) in das eingriffbereite Element der Mehrzahl von Indexierelementen (78a-h) eingreift und dieses dreht, wodurch die drehbare Scheibe (74) zu einer nächsten Winkelposition der Mehrzahl von Winkelpositionen gedreht wird.

11. System nach Anspruch 10, wobei der hin- und herbewegende Aktuator einen Drehmagneten umfasst, der konfiguriert ist, eine Schaltklinke (70) abwechselnd um die Drehachse zwischen einer ersten und einer zweiten Winkelposition zu drehen, die einen Winkelabstand zueinander aufweisen, der größer ist als der Winkelabstand, der den regelmäßigen Winkelabständen entspricht, die durch die Abfolge von Rotationspositionen definiert sind.

12. System nach einem der Ansprüche 6 bis 11, wobei die Steuerung Folgendes umfasst:
eine Mehrzahl von Schaltern, die konfiguriert sind, Steuersignale zu erzeugen, die Rotationswinkel der zweiten drehbaren Welle anzeigen, die dem Ausfahren und Zurückziehen jedes der Indexanschlag- und Index-Halteelemente entsprechen.

13. System nach einem der Ansprüche 6 bis 12, wobei die Rotationssicherungsanordnung Folgendes umfasst:
ein Indexanschlagelement, das konfiguriert ist, sich zwischen einer ersten Position und einer zweiten Position zu bewegen, wobei das Indexanschlagelement konfiguriert ist, eine Vorwärtsdrehung eines letzten rotationsbegrenzten Elements der Mehrzahl von Indexierelementen (78a-h) zu ermöglichen, wenn es sich in der ersten Position befindet, und eine Vorwärtsdrehung eines nächsten rotationsbegrenzten Elements der Mehrzahl von Indexierelementen (78a-h) in der zweiten Position zu blockieren; und
ein Index-Halteelement, das konfiguriert ist, sich zwischen einer ersten Position und einer zweiten Position zu bewegen, wobei das Index-Halteelement konfiguriert ist, eine Rückwärtsdrehung eines letzten rotationsbegrenzten Elements der Mehrzahl von Indexierelementen (78a-h) in der ersten Position zu blockieren und eine Vorwärtsdrehung eines nächsten rotationsbegrenzten Elements der Mehrzahl von Indexierelementen (78a-h) zu ermöglichen, wenn es sich in der zweiten Position befindet.

14. System nach einem der Ansprüche 6 bis 13, wobei die Steuerung Folgendes umfasst:
einen ersten Steuerschalter, der konfiguriert ist, ein erstes Signal zu erzeugen, das eine erste Rotationsposition der Schaltklinke (70) anzeigt, bei der sich das Indexanschlag- und Index-Halteelement von den zweiten Positionen in die ersten Positionen bewegen, wodurch das gesicherte Element der Mehrzahl von Indexierelementen (78a-h) freigegeben wird;
einen zweiten Steuerschalter, der konfiguriert ist, ein zweites Signal zu erzeugen, das eine zweite Rotationsposition der Schaltklinke (70) anzeigt, bei der sich das Indexanschlagelement von der ersten Position in die zweite Position bewegt, wodurch eine Vorwärtsdrehung eines nächsten gesicherten Elements der Mehrzahl von Indexierelementen (78a-h) blockiert wird; und
einen dritten Steuerschalter, der konfiguriert ist, ein drittes Signal zu erzeugen, das eine dritte Rotationsposition der Schaltklinke (70) anzeigt, bei der sich das Index-Halteelement von der ersten Position in die zweite Position bewegt, wodurch eine Rückwärtsdrehung eines nächsten gesicherten Elements der Mehrzahl von Indexierelementen (78a-h) blockiert wird.

15. System nach einem der Ansprüche 6 bis 14, wobei die Steuerung Folgendes umfasst:
eine Leiterplatte "PCB", die mit der zweiten drehbaren Welle gekoppelt ist, wobei die Leiterplatte freiliegende radiale Leiterbahnen aufweist, die elektrischen Kontakt mit einer Bürstenanordnung herstellen, wodurch das erste, zweite und dritte Steuersignal erzeugt werden.

## Revendications

1. Un procédé pour ouvrir et/ou fermer séquentiellement une séquence d'interrupteurs d'un relais pas à pas pour un système de dégivrage de pale de rotor, le procédé comprenant les étapes consistant à :
fixer un, dont la rotation est restreinte, d'une séquence circulaire d'organes d'indexation (78a-h) fixés à un disque rotatif (74) le long d'un trajet circulaire centré sur un axe de rotation, dans lequel la fixation est commandée par un système de commande configuré pour coordonner les opérations de l'ensemble de fixation rotatif et de l'ensemble de rochet,
empêchant ainsi la rotation du disque rotatif (74) depuis une
position fixée d'une séquence de positions rotatives ;
rétracter un cliquet de rochet (70), le positionnant ainsi dans une position prête à faire avancer la rotation ;
libérer celui, dont la rotation est restreinte, de la séquence circulaire d'organes d'indexation
(78a-h) fixés au disque rotatif (74) de sorte que le disque rotatif (74) puisse tourner librement ;
avancer le cliquet de rochet (70) de manière à venir en prise avec un élément d'une séquence circulaire
d'organes d'avancement, faisant ainsi tourner le disque rotatif (74) vers une position suivante
de la séquence de positions rotatives ;
ouvrir ou fermer, par l'intermédiaire d'une came couplée au disque rotatif (74), un élément aligné d'une
séquence circulaire d'interrupteurs normalement fermés et/ou normalement ouverts,
respectivement, qui sont fixés à un cadre annulaire et répartis le long d'un second trajet circulaire centré sur l'axe de rotation ; et
répéter les étapes ci-dessus, ouvrant ainsi séquentiellement et/ou fermant la séquence circulaire
d'interrupteurs normalement fermés et/ou normalement ouverts.

2. Le procédé de la revendication 1, dans lequel la fixation de celui, dont la rotation est restreinte, de la séquence circulaire
d'organes d'indexation (78a-h) fixés au disque rotatif (74) comprend :
le blocage, par l'intermédiaire d'un organe de butée d'indexation, d'un trajet avant de celui, dont la rotation est restreinte,
de la séquence circulaire d'organes d'indexation (78a-h), provoquant ainsi l'arrêt de la rotation
du disque rotatif lorsque celui, dont la rotation est restreinte, de la
séquence circulaire d'organes d'indexation (78a-h) vient en prise avec l'organe de butée
d'indexation ; et
le blocage, par l'intermédiaire de l'organe de maintien d'indexation, d'un trajet arrière de celui, dont la rotation est restreinte,
de la séquence circulaire d'organes d'indexation (78a-h), restreignant ainsi
la rotation inverse du disque rotatif, et
dans lequel la libération de celui, dont la rotation est restreinte, de la séquence circulaire d'organes d'indexation
(78a-h) fixés au disque rotatif (74) comprend :
le désengagement d'un organe de butée d'indexation et d'un organe de maintien d'indexation de celui, dont la rotation est
restreinte, d'une séquence circulaire d'organes d'indexation (78a-h) couplés au disque rotatif (74), permettant ainsi la libre rotation du disque rotatif (74), et
dans lequel l'avancement du cliquet de rochet (70) de manière à venir en prise avec un élément d'une séquence
circulaire d'organes d'avancement comprend :
le déplacement alterné, par l'intermédiaire d'un actionneur alternatif, du cliquet de rochet (70) dans les première
et seconde directions, exécutant ainsi des cycles d'actionnement, au cours de chacun desquels le cliquet de rochet (70) vient en prise avec et fait tourner celui, prêt à l'engagement,
de la séquence circulaire d'organes d'indexation (78a-h), faisant ainsi tourner
le disque rotatif (74) vers une position suivante de la pluralité de positions angulaires.

3. Le procédé de l'une quelconque des revendications précédentes, dans lequel l'actionneur alternatif est un solénoïde rotatif, et l'avancement d'un cliquet de rochet (70) dans une première direction comprend :
la rotation, à partir d'une première position angulaire selon un angle prédéterminé jusqu'à une
seconde position angulaire dans une direction angulaire avant, d'un arbre rotatif auquel
le cliquet de rochet (70) est raccordé, dans lequel la rotation de l'arbre rotatif est effectuée
en réponse à un fonctionnement avant d'un solénoïde rotatif, et
comprenant en outre :
la synchronisation de l'organe de butée d'indexation avec la position angulaire du cliquet de rochet
(70) ; et
la synchronisation de l'organe de maintien d'indexation avec la position angulaire du cliquet de rochet
(70).

4. Le procédé de l'une quelconque des revendications précédentes, dans lequel la synchronisation des organes de butée d'indexation et de maintien d'indexation comprend :
l'actionnement d'une pluralité d'interrupteurs en réponse à la position rotative du cliquet de
rochet (70), et dans lequel le désengagement d'un organe de butée d'indexation et d'un
organe de maintien d'indexation d'un dernier, dont la rotation est restreinte, d'une pluralité d'organes
d'indexation (78a-h) est commandé par un premier interrupteur électrique s'activant en
réponse au fait que la position rotative du cliquet de rochet (70) soit supérieure à un premier angle rotatif prédéterminé.

5. Le procédé de l'une quelconque des revendications précédentes, dans lequel le blocage, par l'intermédiaire de l'organe de butée d'indexation, du
trajet avant du suivant, dont la rotation est restreinte, de la pluralité d'organes d'indexation (78a-h) est
commandé par un second interrupteur électrique s'activant en réponse au fait que la position rotative du
cliquet de rochet (70) soit supérieure à un second angle rotatif prédéterminé, et dans lequel
le blocage, par l'intermédiaire de l'organe de maintien d'indexation, du trajet arrière du suivant, dont la rotation est restreinte,
de la pluralité d'organes d'indexation (78a-h) est commandé par un troisième interrupteur électrique s'activant en
réponse au fait que la position rotative du cliquet de rochet (70) soit supérieure à un troisième angle rotatif
prédéterminé.

6. Un système pour ouvrir et/ou fermer séquentiellement une pluralité d'interrupteurs d'un relais pas à pas pour un système de dégivrage de pale de rotor, le système comprenant :
un disque rotatif (74) ayant une pluralité d'organes d'indexation (78a-h) fixés
à celui-ci, la pluralité d'organes d'indexation (78a-h) étant répartie uniformément le long
d'un trajet circulaire centré sur un axe de rotation du disque rotatif (74) ;
un ensemble de rochet configuré pour venir en prise séquentiellement avec une pluralité d'organes
d'avancement du disque rotatif (74), faisant ainsi tourner séquentiellement le
disque rotatif (74) vers une position suivante de la séquence de positions rotatives ;
une pluralité d'interrupteurs fixés à un cadre annulaire et répartis le long d'un second
trajet circulaire centré sur l'axe de rotation et alignés axialement avec une came couplée au disque rotatif (74), chacun de la pluralité d'interrupteurs ayant un contact à ressort configuré pour ouvrir ou fermer l'interrupteur en réponse à une came étant alignée en rotation avec le contact à ressort ;
et **caractérisé par**,
un ensemble de fixation rotatif configuré pour fixer et libérer séquentiellement la pluralité d'organes d'indexation (78a-h) fixés à un disque rotatif (74), fixant et libérant ainsi séquentiellement le disque rotatif (74) à et depuis une séquence de positions rotatives ; et
un système de commande configuré pour coordonner les opérations de l'ensemble de fixation
rotatif avec l'ensemble de rochet de manière à faire avancer la rotation du
disque rotatif (74) de façon progressive vers une position suivante dans la séquence de
positions rotatives, de telle sorte que : i) l'ensemble de fixation rotatif libère un organe, précédemment fixé, de la pluralité d'organes d'indexation (78a-h) du
disque rotatif (74) ; puis ii) l'ensemble de rochet vient en prise avec un élément suivant de
la pluralité d'organes d'avancement du disque rotatif (74) ; puis iii) l'organe de fixation rotatif fixe un élément suivant, fixé, de la pluralité d'organes d'indexation (78a-h) ; et iv) les étapes i) à iii) sont répétées,
ouvrant ainsi séquentiellement ou fermant la pluralité d'interrupteurs normalement fermés
et/ou normalement ouverts.

7. Le système de la revendication 6, dans lequel les organes d'avancement et les organes d'indexation (78a-h) sont un seul et même élément.

8. Le système de la revendication 6 ou 7, dans lequel la pluralité d'interrupteurs est répartie à intervalles angulaires réguliers le long d'un second trajet circulaire centré sur l'axe de rotation.

9. Le système de l'une quelconque des revendications 6 à 8, dans lequel chacune de la séquence de positions rotatives du disque rotatif (74) aligne la came avec un élément correspondant de la pluralité d'interrupteurs.

10. Le système de l'une quelconque des revendications 6 à 9, dans lequel l'ensemble de rochet comprend :
un cliquet de rochet (70) configuré pour venir en prise avec et faire tourner celui, prêt à l'engagement,
de la pluralité d'organes d'indexation (78a-h) lors d'un déplacement dans une première
direction et pour contourner un élément suivant, prêt à l'engagement, de la pluralité
d'organes d'indexation (78a-h) lors d'un déplacement dans une seconde direction ; et
un actionneur alternatif qui déplace alternativement le cliquet de rochet (70) dans les première
et seconde directions, exécutant ainsi des cycles d'actionnement, au cours de chacun desquels le cliquet de rochet (70) vient en prise avec et fait tourner celui, prêt à l'engagement,
de la pluralité d'organes d'indexation (78a-h), faisant ainsi tourner le
disque rotatif (74) vers une position suivante de la pluralité de positions angulaires.

11. Le système de la revendication 10, dans lequel l'actionneur alternatif comprend un solénoïde rotatif
configuré pour faire tourner alternativement un cliquet de rochet (70) autour de l'axe de rotation entre une première et une
seconde position angulaire ayant entre elles une différence angulaire supérieure à la distance angulaire
égale aux intervalles angulaires réguliers définis par la séquence de positions rotatives.

12. Le système de l'une quelconque des revendications 6 à 11, dans lequel le contrôleur comprend :
une pluralité d'interrupteurs configurés pour générer des signaux de commande indicatifs des
angles de rotation du second arbre rotatif correspondant à la projection et
à la rétraction de chacun des organes de butée d'indexation et de maintien d'indexation.

13. Le système de l'une quelconque des revendications 6 à 12, dans lequel l'ensemble de fixation rotatif comprend :
un organe de butée d'indexation configuré pour se déplacer entre une première position et une seconde
position, l'organe de butée d'indexation étant configuré pour permettre la rotation avant d'un
dernier, dont la rotation est restreinte, de la pluralité d'organes d'indexation (78a-h)
lorsqu'il est dans la première position et pour bloquer la rotation avant d'un suivant, dont la rotation est
restreinte, de la pluralité d'organes d'indexation (78a-h) dans la seconde position ; et
un organe de maintien d'indexation configuré pour se déplacer entre une première position et une seconde
position, l'organe de maintien d'indexation étant configuré pour bloquer la rotation inverse d'un
dernier, dont la rotation est restreinte, de la pluralité d'organes d'indexation (78a-h) dans
la première position et pour permettre la rotation avant d'un suivant, dont la rotation est restreinte,
de la pluralité d'organes d'indexation (78a-h) lorsqu'il est dans la seconde position.

14. Le système de l'une quelconque des revendications 6 à 13, dans lequel le contrôleur comprend :
un premier interrupteur de commande configuré pour générer un premier signal indicatif d'une première
position rotative du cliquet de rochet (70) à laquelle les organes de butée d'indexation et
de maintien d'indexation passent des secondes positions aux premières positions,
libérant ainsi celui, fixé, de la pluralité d'organes d'indexation (78ah) ;
un second interrupteur de commande configuré pour générer un second signal indicatif d'une
seconde position rotative du cliquet de rochet (70) à laquelle l'organe de butée d'indexation passe de la première position à la seconde position, bloquant ainsi la rotation avant d'un suivant, fixé, de la pluralité d'organes d'indexation (78a-h) ; et
un troisième interrupteur de commande configuré pour générer un troisième signal indicatif d'une
troisième position rotative du cliquet de rochet (70) à laquelle l'organe de maintien
d'indexation passe de la première position à la seconde position, bloquant ainsi la rotation inverse d'un suivant, fixé, de la pluralité d'organes d'indexation (78a-h).

15. Le système de l'une quelconque des revendications 6 à 14, dans lequel le contrôleur comprend :
un circuit imprimé « PCB » couplé au second arbre rotatif, le PCB
ayant des pistes radiales exposées qui établissent un contact électrique avec un ensemble
de balais, générant ainsi les premier, deuxième et troisième signaux de commande.
